# EUROPEAN PATENT SPECIFICATION

(11) **EP 1 804 024 B1**
(45) Date of publication and mention of the grant of the patent: **09.05.2012**
(21) Application number: 05790572.1
(22) Date of filing: 05.10.2005
(51) Int. Cl.: G01C 21/00, G08G 1/0969, G09B 29/00

(54) **ROUTE SEARCH DEVICE AND NAVIGATION DEVICE**
ROUTENSUCHEINRICHTUNG UND NAVIGATIONSEINRICHTUNG
DISPOSITIF DE RECHERCHE D'ITINERAIRE ET DISPOSITIF DE NAVIGATION

(30) Priority: 18.10.2004 JP 2004302863
(43) Date of publication of application: 04.07.2007
(73) Proprietor: Pioneer Corporation, Kanagawa 212-0031 (JP)
(72) Inventor: SHIMOMA, Susumu, Pioneer Corporation Kawagoe Works, Kawagoe-shi, Saitama 3508555 (JP)
(74) Representative: Haley, Stephen
(86) International application number: PCT/JP2005/018448
(87) International publication number: WO 2006/043419

(56) References cited:
- WO-A1-96/35924
- WO-A1-2004/072893
- JP-A- 08 016 991
- JP-A- 2002 236 027
- JP-A- 2004 053 492
- JP-A- 2005 106 475

## Description

### TECHNICAL FIELD

The present invention relates to a route searching apparatus, a navigation apparatus, a route searching method, a route searching program, and a computer-readable recording medium.

### BACKGROUND ART

Conventionally, a route searching function of setting and guiding along a route from a place of departure to a destination is known as a basic function of a car navigation apparatus. The car navigation apparatus can search for a plurality of routes and, in selecting among candidate routes, can show a route that a vehicle can pass through, based on vehicle information (for example, vehicle width, height, and weight) (see, for example, patent document 1 below).

Patent document 1: Japanese Patent Application Laid-Open Publication No. 2004-93212

### DISCLOSURE OF INVENTION

### PROBLEM TO BE SOLVED BY THE INVENTION

However, the technology described in the patent document 1 has, for example, a problem in that the vehicle information must be manually input in advance. With such inputting, it is conceivable that erroneous vehicle information can be input. Furthermore, each time the vehicle height or weight manually input as vehicle information at the time of purchase, etc., changes due to repair, addition of parts, etc., subsequent to the purchase, it becomes necessary to manually input the vehicle information. At such time, it is conceivable that the manual inputting of the vehicle information can be forgotten. When the vehicle information set in the navigation apparatus is different from the actual status, there arises, for example, a problem in that the navigation apparatus cannot accurately show a route that the vehicle can pass through.
WO20040728 discloses a high occupancy vehicle (HOV) restriction aware navigation system for a vehicle that is able to determine whether seats in the vehicle are occupied and then provides navigation information to a user, including whether the vehicle is authorised to travel on HOV sections of road. JP2004053492A discloses a navigation system for a particular vehicle in which information on the traffic regulations applicable to the particular vehicle are stored in a storage means and are used in the determination of navigation instructions for the particular vehicle.

### MEANS FOR SOLVING PROBLEM

In a first aspect, the invention consists in route searching apparatus comprising:
an acquiring unit that acquires restriction information set for a restriction point restricting passage of a vehicle;
a judging unit that judges a traveling situation of the vehicle with respect to the restriction point by judging whether the vehicle has passed the restriction point;
a setting unit that sets vehicle information, based on the restriction information and the traveling situation;
a command unit that commands a route searching; and
a searching unit that, upon command of the route searching, searches for a route traversable by the vehicle based on the vehicle information
characterised in that when the judging unit judges that the vehicle has passed the restriction point, the setting unit compares the restriction information with the vehicle information to obtain a comparison result, and newly sets the vehicle information based on the comparison result.

In a second aspect, the invention consists in a navigation apparatus comprising the route searching apparatus according to the first aspect; a presentation unit that presents various types of information; an approach determining unit that determines whether the vehicle has approached the restriction point ahead in its traveling direction; and a control unit that, when the approach determining unit determines that the vehicle has approached the restriction point ahead in a traveling direction of the vehicle, causes the presentation unit to present the information regarding the restriction point.

In a third aspect, the invention consists in a navigation apparatus comprising the route searching apparatus according to the first aspect; a presentation unit that presents the information regarding the route searched for by the searching unit; an approach determining unit that determines whether the vehicle has approached the restriction point on the route; and a control unit that, when the approach determining unit determines that the vehicle has approached the restriction point on the route, causes the presentation unit to present the information regarding the restriction point.

In a fourth aspect, the invention consists in a route searching method comprising:
acquiring restriction information set for a restriction point restricting passage of a vehicle;
judging a traveling situation of the vehicle with respect to the restriction point by judging whether the vehicle has passed the restriction point;
setting vehicle information based on the restriction information and the traveling situation;
commanding a route search; and
searching for, based on the vehicle information, a route traversable by the vehicle when the route search is commanded,
characterised in that when the judging step judges that the vehicle has passed the restriction point, the setting step compares the restriction information with the vehicle information to obtain a comparison result, and newly sets the vehicle based on the comparison result information.

In a fifth aspect, the invention consists in a route searching program that causes a computer to execute the route searching method according to the fourth aspect.

In a sixth aspect, the invention consists in a computer-readable recording medium that stores therein the route searching program according to the fifth aspect.

### BRIEF DESCRIPTION OF DRAWINGS

Fig. 1 is a block diagram of an example of a functional configuration of a navigation apparatus according to embodiments of the present invention;
Fig. 2-1 is a flowchart of an example of a procedure of processing of the navigation apparatus according to the embodiments of the present invention;
Fig. 2-2 is a flowchart of an example of a procedure of route searching processing of the navigation apparatus according to the embodiments of the present invention;
Fig. 3 is a block diagram of an example of a hardware configuration of the navigation apparatus according to examples of the present invention;
Fig. 4 is a flowchart of a procedure of processing to be executed by the navigation apparatus while a vehicle is running; and
Fig. 5 is a flowchart of a procedure of processing to be executed by the navigation apparatus while guiding the vehicle along the route.

### EXPLANATIONS OF LETTERS OR NUMERALS

- 101: reading unit
- 102: judging unit
- 103: setting unit
- 104: searching unit
- 105: memory unit
- 106: control unit
- 107: presentation unit
- 110: command unit
- 111: approach determining unit
- 300: navigation control unit
- 301: user operation unit
- 302: display unit
- 303: position recognizing unit
- 304: recording medium
- 305: recording medium decoding unit
- 306: guidance sound output unit
- 307: point searching unit
- 308: route searching unit
- 309: route guidance unit
- 310: guidance sound generating unit
- 311: speaker

### BEST MODE(S) FOR CARRYING OUT THE INVENTION

Detailed description is made of exemplary embodiments of a route searching apparatus, a navigation apparatus, a route searching method, a route searching program, and a computer-readable recording medium according to the present invention, with reference to the accompanying drawings.

### (Functional Configuration of Navigation Apparatus)

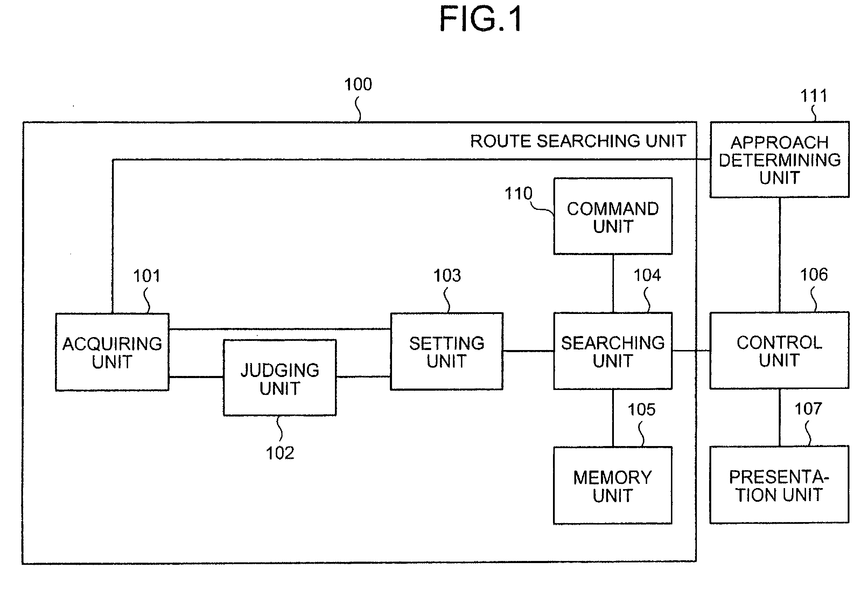

Description will firstly be made of contents of the navigation apparatus according to embodiments of the present invention. Fig. 1 is a block diagram of an example of a functional configuration of the navigation apparatus according to the embodiments of the present invention.

As shown in Fig. 1, the navigation apparatus equipped in a vehicle (including a four-wheeled vehicle and a two-wheeled vehicle), etc., includes a route searching unit 100, a control unit 106, a presentation unit 107, and an approach determining unit 111.

The route searching unit 100 includes an acquiring unit 101, a judging unit 102, a setting unit 103, a searching unit 104, a memory unit 105, and a command unit 110.

The acquiring unit 101 acquires restriction information set for a restriction point that restricts passage of a vehicle. The restriction point is, for example, a passage under an elevated road or railroad, a parking lot, a bridge, a tunnel, and a railroad crossing, and the restriction information includes a width, a height, a weight, etc., of a vehicle that can pass such a restriction point. The timing of acquisition of such restriction information is when the searching unit 104 searches for a route from a point of departure to a destination, when the vehicle has entered a predetermined area centering around the restriction point, when the approach determining unit 111 determines that the vehicle has approached the restriction point, etc. Judgment of whether the vehicle has entered the predetermined area centering around the restriction point or whether the vehicle has approached the restriction point is made based on information such as positional information of the vehicle as recognized by a position recognizing unit (not shown) which recognizes a position, a speed, a traveling direction, etc., of a vehicle, using a GPS, a vehicle speed sensor, a gyro-sensor, etc., and the positional information of the restriction point.

The judging unit 102 judges a traveling situation of the vehicle at the restriction point acquired by the acquiring unit 101. The judging unit 102 judges, as the traveling situation of the vehicle, whether the vehicle has passed the restriction point, the vehicle did not pass the restriction point notwithstanding the guiding of the vehicle along the route (the vehicle has avoided the passage through the restriction point), or otherwise.

The setting unit 103 sets the vehicle information for each restriction point, depending on whether the vehicle was able to pass the restriction point. Specifically, when the vehicle is able to pass through a road for which a vehicular width limit is provided as the vehicle restriction information, the setting unit 103 sets the value of the width limit for the road as the vehicle information. The vehicle information set by the setting unit 103 is stored in the memory unit 105 or a memory, etc., not shown. The memory unit 105 stores various kinds of information necessary for the navigation processing such as map information and facilities information.

The searching unit 104, at the time of route searching, reads out the map information from the memory unit 105 and searches for a route from a point of departure to a destination point. In so doing, the searching unit 104, referring to the vehicle information (width, height and weight of the vehicle) set by the setting unit 103, searches for a route along which this vehicle can pass restriction points on roads for which the restriction information is provided.

When the approach determining unit 111 determines that the vehicle has approached the restriction point, the control unit 106 has the presentation unit 107 make presentation to the effect that the vehicle has approached the restriction point. When the vehicle has approached the restriction point on the route searched for, the control unit 106 can have the presentation unit 107 present the information regarding the passage or non-passage at the restriction point (restriction information).

The presentation unit 107 presents the information regarding the route searched for by the searching unit 104, under control of the control unit 106. Configuration may be such that information is presented not only by display but also by voice. The information regarding the route includes, for example, route information, information on facilities along the route, fee information, time information, etc. Configuration may be such that the presentation unit 107 presents the restriction information (vehicular width, height and weight) of the restriction point approached by the vehicle by either display or voice.

The command unit 110 commands the searching unit 104 to execute route searching processing when a searching request arises for any reason. The command unit 110 commands the searching, for example, at any one of, or a combination of, the time when a route searching request is made by a user, the time when the vehicle departs from the route while the vehicle is being guided along the route, and the time when the setting unit 103 newly sets the vehicle information or impassable information while the vehicle is being guided along the route. Configuration may be such that the command unit 110 commands the searching by a method other than those mentioned above.

The approach determining unit 111 determines whether the vehicle has approached the restriction point, using the information such as the positional information of the vehicle and traveling direction information detected by the position recognizing unit (not shown) and the information regarding the restriction point. When the vehicle has approached the restriction point, the approach determining unit 111 presents the information regarding the restriction point to the presentation unit 107. The "information regarding the restriction point" includes the positional information of the restriction point, the information indicating the approach to the restriction point, the restriction information set at the restriction point, etc.

### (Procedure of Processing of Navigation Apparatus)

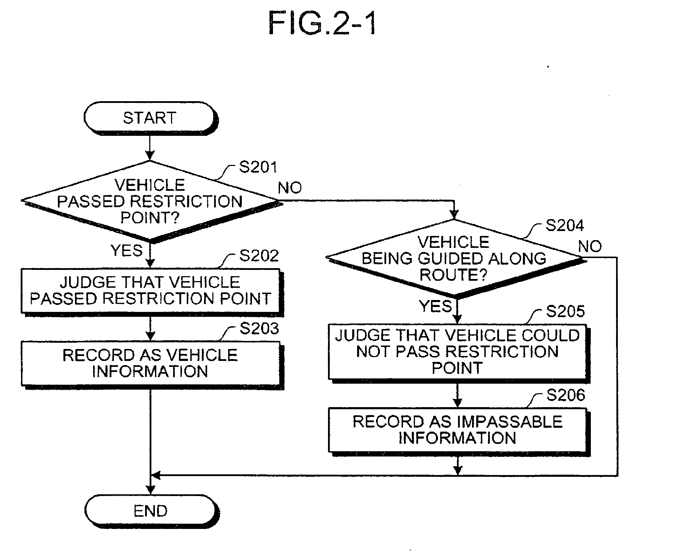

Description is made of a procedure of processing in the navigation apparatus according to the embodiments of the present invention. Fig. 2-1 is a flowchart of an example of a procedure of vehicle information setting processing in the navigation apparatus according to the embodiments of the present invention.

In the flowchart of Fig. 2-1, firstly, judgment is made whether the vehicle has passed the restriction point based on positional information of the vehicle, the positional information of the restriction point, etc., while the vehicle is traveling (step S201). When the restriction point is passed (step S201: YES), it is judged that the vehicle has passed the restriction point (step S202). Next, the restriction information set for this restriction point is recorded as the vehicle information (step S203) and the processing is finished.

As seen above, each time the vehicle can pass a restriction point, the restriction information set for the restricted point that is passed can be acquired and be record-updated as the vehicle information. The restriction information includes a road width corresponding to vehicular width, a height limitation of the road corresponding to vehicular height, a weight limit for the road corresponding to vehicular weight, etc. In this way, the automatic setting of values proximate to actual width, height, and weight of the vehicle, without the user setting the vehicle information (and even in the event that the vehicle information is not known to the user) becomes possible. The vehicle information thus set can be used at the time of subsequent route searching as the information for searching for an optimum route that the vehicle can pass through.

On the other hand, when the vehicle does not pass the restriction point (step S201: NO), judgment is made whether the vehicle is being guided along the route searched for (step S204). If the vehicle is being guided along the route (step S204: YES), then it is judged that the vehicle cannot pass this restriction point (step S205), this fact is recorded as impassable information (step S206), and the processing is finished. On the other hand, if the vehicle is not being guided (step S204: NO), then the processing ends without the execution of step 205 or step 206.

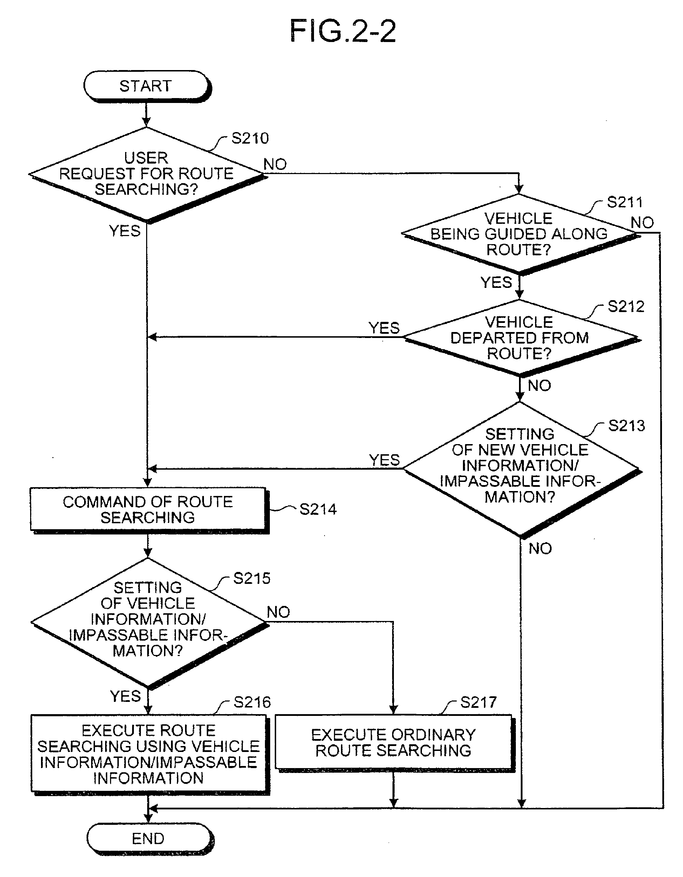

Fig. 2-2 is a flowchart of an example of a procedure of route searching processing in the navigation apparatus according to the embodiments of the present invention. This flowchart shows contents of the route searching processing to be performed by the searching unit 104. The route searching processing by the searching unit 104 is performed using the vehicle information that has been set upon receipt of any searching command.

Firstly, judgment is made whether the route searching is requested by the user (step S210). This user route searching request is made by the user inputting a place of departure, a destination, etc., by operating a remote control, a touch panel, etc. The place of departure may be replaced by the current location of the vehicle. If the route searching is requested by the user (step S210: YES), then the command unit 110 commands the searching unit 104 to perform the route searching processing (step S214). If the route searching is not requested by the user (step S210: NO), then judgment is made whether the vehicle is being guided along the route previously searched for (step S211). In the case of the vehicle being guided along the route (step S 211: YES), when the vehicle departs from the route (step S212: YES) or when the setting unit 103 sets new vehicle information or impassable information (step S213: YES), the route searching processing command of step S214 is given. The route searching command given when the vehicle departs from the route (step S212: YES) or when the setting unit 103 sets new vehicle information or impassable information (step S213: YES) is the command to have the searching unit 104 search for a route from the current position of the vehicle to the destination of the route along which the vehicle is being guided.

On the other hand, at step S211, when the vehicle is not being guided along the route (step S211: NO), at step 212, when the vehicle does not depart from the route (step S212: NO) or at step 213, when the setting unit 103 does not set new vehicle information or impassable information (step S213: NO), the procedure comes to an end without performing the route searching processing.

When the route searching processing is commanded at step S214, judgment is made whether any vehicle information or impassable information is set by the setting unit 103 (step S215). If vehicle information or impassable information is set by the setting unit 103 (step S215: YES), then the searching unit 104 executes the route searching processing taking into account the vehicle information or impassable information set by the setting unit 103 (step S216) and the route searching processing is finished.

On the other hand, if no vehicle information or impassable information is set by the setting unit 103 (step S215: NO), then the searching unit 104 executes ordinary route searching processing without referring to contents of setting by the setting unit 103 (step S217) and the route searching processing is finished.

### Examples

### (Hardware Configuration)

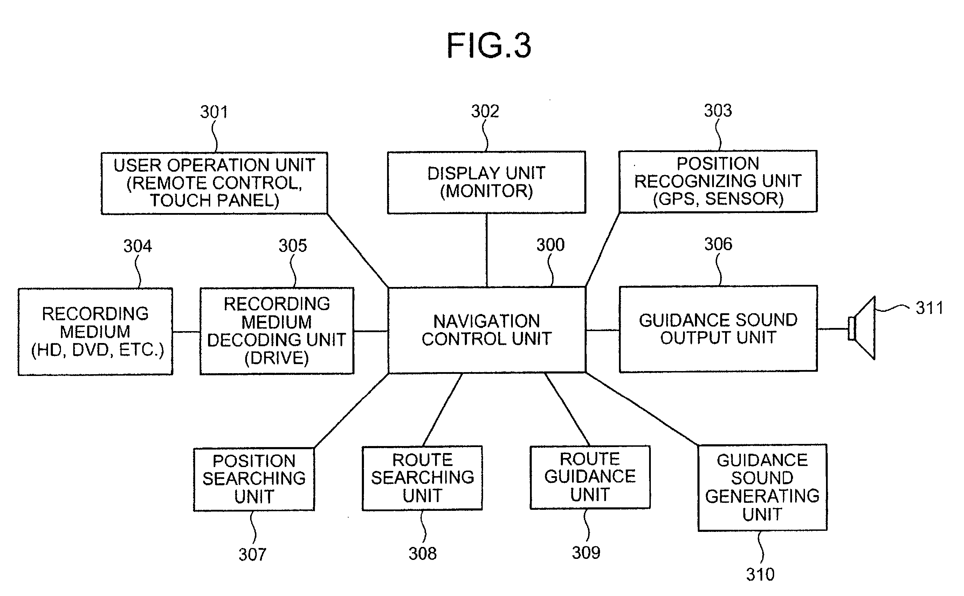

Description is made of a hardware configuration of the navigation apparatus according to examples of the present invention. Fig. 3 is a block diagram of an example of the hardware configuration of the navigation apparatus according to examples of the present invention.

As shown in Fig. 3, the navigation apparatus according to the examples of the present invention is equipped in the vehicle and includes a navigation control unit 300, a user operation unit 301, a display unit 302, a position recognizing unit 303, a recording medium 304, a recording medium decoding unit 305, a guidance sound output unit 306, a point searching unit 307, a route searching unit 308, a route guidance unit 309, a guidance sound generating unit 310, and a speaker 311.

The navigation control unit 300 controls the navigation apparatus as a whole. The user operation unit 301 includes operation buttons, a remote control, a touch panel, etc. The display unit 302 includes a liquid crystal display, an organic EL display, etc.

The position recognizing unit 303 acquires the positional information (for example, latitude and longitude) of the vehicle by receiving electromagnetic waves from GPS satellites. Configuration may be such that the positional information of the vehicle is calculated from various sensors such as a vehicle speed sensor and a gyro-sensor or configuration may be such that the positional information of the vehicle is calculated using the information obtained by receiving the electromagnetic waves from the GPS satellites and the information obtained from various sensors. The positional recognizing unit 303 may acquire the speed information and traveling direction information in addition to the positional information of the vehicle.

The recording medium 304 is, for example, a hard disk (HD) or instead thereof or in addition thereto, may be a removable recording medium such as a DVD or a compact disk (CD). This recording medium stores various types of information necessary for the navigation processing such as map information and facilities information. The recording medium decoding unit 305 controls reading and writing of the HD, the DVD, and the CD.

The navigation control unit 300 outputs to the display unit 302 at which position of the map the vehicle is traveling based on the positional information of the vehicle calculated by the position recognizing unit 303 and the map information obtained from the recording medium 304 by way of the recording medium decoding unit 305.

The guidance sound output unit 306 controls the output of sound information to one or more speakers 311 so that the speaker 311 will audibly output guidance sounds.

The point searching unit 307 searches for any arbitrary point based on the information input from the user operation unit 301 and outputs this to the display unit 302. Based on the point information obtained by the point searching unit 307, the route searching unit 308 calculates an optimum route to such point. The route guidance unit 309 generates real-time route guidance information based on the information obtained by the route searching unit 308, the positional information of the vehicle, etc.

The guidance sound generating unit 310 generates tone and voice data corresponding to a pattern. Namely, the guidance sound generating unit 310, based on the route information, sets a virtual sound source, and generates voice guidance information corresponding to a guidance point, and outputs this information to the guidance sound output unit 306.

Furthermore, the navigation control unit 300, like the approach determining unit 111 shown in Fig. 1, determines whether the vehicle has approached the restriction point using information such as the positional information of the vehicle and traveling direction information detected by the position recognizing unit 303 and the information regarding the restriction points. When the vehicle has approached the restriction point, the navigation control unit 300 has the display unit 302 present the information regarding the restriction point.

Determination of whether the vehicle has approached the restriction point can be made irrespective of whether the route is set by the route searching unit 308.

For example, in case the route is not set, the navigation control unit 300 determines that the vehicle has approached a restriction point when the distance between the restriction point ahead of the vehicle in its traveling direction and the vehicle is equal to or less than a predetermined distance (for example, within 100 meters). Then, the navigation control unit 300 causes the display unit 302 to display, or the speaker 311 to audibly output, the guidance of the information regarding the restriction point such as the location of the restriction point, the fact that the restriction point is present, and the restriction information of the restriction point.

In case the route is set by the route searching unit 308, the navigation control unit 300 can also give a guidance of the information regarding the restriction point when the vehicle has approached a restriction point on the route. In this case, the navigation control unit 300 determines that the vehicle has approached the restriction point using the positional information of the vehicle, the route information, and the positional information of the restriction point.

For example, the navigation control unit 300 determines that the vehicle has approached the restriction point when the distance (the distance as measured along the shape of the route) between the restriction point on the route to be passed by the vehicle and the vehicle becomes equal to or less than a predetermined distance (for example, within 100 meters). Then, the navigation control unit 300 causes the display unit 302 to display, or the speaker 311 to audibly output, the guidance of the information regarding the restriction point such as the location of the restriction point, the fact that the restriction point is present, and the restriction information of the restriction point.

### (Procedure of Processing of Navigation Apparatus)

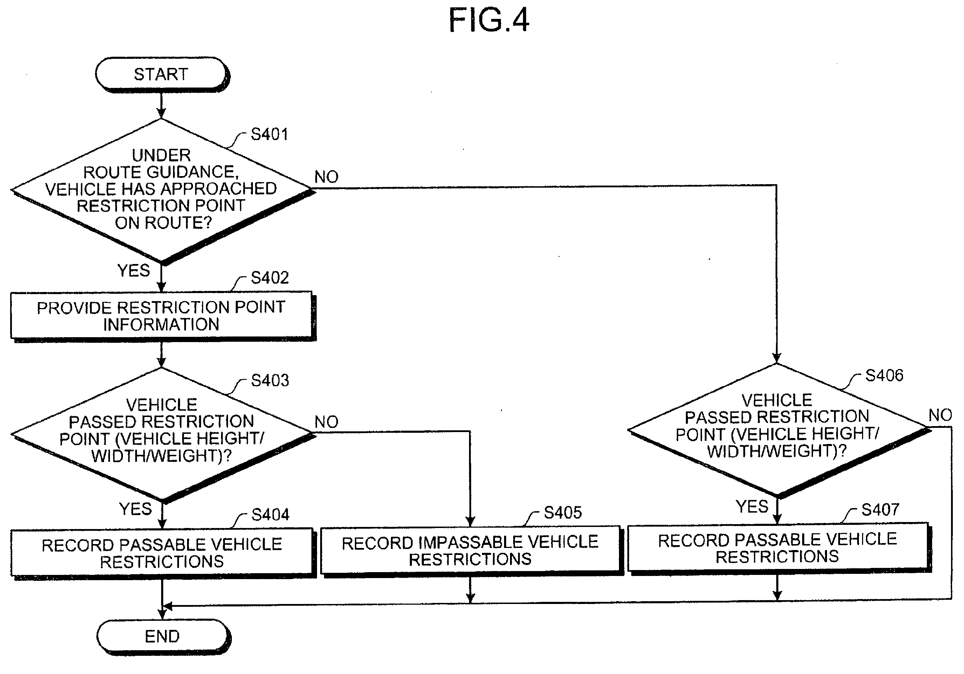

Description is made of a procedure of processing of the navigation apparatus according to the examples of the present invention. Fig. 4 is a flowchart of a procedure of processing executed by the navigation apparatus while the vehicle is traveling.

A width limit is imposed for some bridges, railroad crossings, tunnels, etc., and a weight limit is imposed for some bridges, parking lots, etc. A vehicle height limit is imposed for some passages under elevated roads or railroads, parking lots, etc. The navigation apparatus stores these restriction points as part of the map information. Configuration may be such that such restriction point information is stored in a memory, etc., as separate information from the map information.

Firstly, judgment is made whether a traveling vehicle while being guided along a route has approached a restriction point on the route (step S401). Judgment of whether the vehicle has approached the restriction point can be made based on the distance (the distance as measured along the shape of the route) between the vehicle and the restriction point on the route. When this distance becomes equal to or less than a predetermined distance, it is judged that the vehicle has approached the restriction point. When the vehicle has approached the restriction point (step S401: YES), a guidance of the information regarding the restriction point is given (step S402). This guidance is performed by having the display unit 302 display a mark at the position corresponding to the restriction point on the map or display relevant information by text. Configuration may be such that the speaker 311 audibly outputs the guidance sounds. On the other hand, if the vehicle while being guided along a route is not approaching a restriction point on the route (step S401: NO), then the procedure goes to step S406.

After the guidance about the approaching restriction point at step S402, judgment is made whether the vehicle has passed the restriction point (step S403). If it is judged that the vehicle has passed the restriction point (step S403: YES), then the fact that the vehicle could actually pass this restriction point is recorded on the recording medium 304 (step S404) and the procedure is finished. At the time of such recording, the restriction information set at the restriction point is recorded on the recording medium 304 as the vehicle information. Specifically, when the vehicle has passed a restriction point where vehicular height is restricted, the value of the vehicular height set for this restriction point is recorded on the recording medium as the vehicle information. In this way, the vehicle height among the vehicle information is recorded as less than the vehicular height set for this restriction point. This vehicle information can be treated as information indicating that the vehicle is able to pass the restriction point, namely, as the passable information.

On the other hand, if the judging unit 102 judges that the vehicle did not pass the restriction point (step S403: NO), then the fact that the vehicle could not actually pass this restriction point is recorded on the recording medium (step S405) and the procedure is finished. In this case, at the time of such recording, the restriction information set at the restriction point is recorded on the recording medium 304 as the impassable information. Specifically, when the vehicle could not pass the restriction point where the vehicular height is restricted, the value of the vehicular height set for this restriction point is recorded on the recording medium as the impassable information. In this way, the vehicle height is recorded as greater than the vehicular height set at this restriction point.

It is possible that, while the vehicle is not guided along the route at step S401 (step S401: NO), the vehicle passes the restriction point. In this case, when the vehicle has passed the restriction point (step S406: YES), the fact that the vehicle could actually pass this restriction point is recorded on the recording medium (step S407) and the procedure is finished. At the time of as such recording, the restriction information set for the restriction point is recorded on the recording medium 304 as the vehicle information. Specifically, when the vehicle is able to pass the restriction point where the vehicular height is restricted, the value of the vehicular height set for this restriction point is recorded on the recording medium as the vehicle information. In this way, the vehicle height among the vehicle information is recorded as less than the vehicular height set for this restriction point. This vehicle information can be treated as information indicating that the vehicle is able to pass the restriction point, namely, as the passable information. On the other hand, if the vehicle could not pass the restriction point (step S406: NO), then the procedure is finished without any particular processing.

By the above processing, while the vehicle actually travels on the road, whether the vehicle is able to pass a restriction point is successively recorded on the recording medium 304.

In addition, when the vehicle is able to pass the restriction point, the value of the vehicle information so far stored (past value) and the value of the restriction information set for the restriction point that the vehicle has passed (present value) are compared with each other and, based on the result of the comparison, new vehicle information is set. For example, if the value of the restriction information set for the restriction point that the vehicle has passed (present value) is smaller than the value of the vehicle information so far stored (past value), then the recorded value is updated. Specifically, when the vehicle is able to pass a point having a 2-meter road width, the recorded width of the vehicle is 2 meters. Thereafter, when the vehicle is able to pass a point having 1.9 meter road width, the vehicle width is memory-updated as 1.9 meters. Further at an even later time, if the vehicle passes a point having a 2.1-meter road width, the vehicle width is remains at 1.9 meters, without updating of the memory.

If the vehicle does not pass the restriction point, values of the vehicle information themselves so far recorded (past values) are not updated. Specifically, when the vehicle has passed a point having 2 meter road width in the past, the recorded width of the vehicle is 2 meters. Thereafter, if the vehicle does not pass a point having 1.9 meter road width, the vehicle width remains at 2 meters, without updating of the memory.

Here, the processing executed when the vehicle does not pass the restriction point is summarized as follows: (1) In case the vehicle, while being guided along the route by the navigation apparatus, does not pass the restriction point, it is judged that the vehicle cannot pass the restriction point and the restriction information set for this restriction point is recorded as the impassable information. On the other hand, (2) in case the vehicle, while not being guided along the route by the navigation apparatus, does not pass the restriction point, the vehicle information and the impassable information are not updated.

As seen above, each time the vehicle actually travels and passes the restriction point, the vehicle information recorded on the recording medium 304 can be updated and the vehicle width, height, and weight of the vehicle information can be brought closer to the actual width, height, and weight of the vehicle. Therefore, even if no vehicle information is initially stored on the recording medium 304, merely operating the vehicle and passing the restriction point enable recording of the vehicle information.

The vehicle width, height, and weight of the vehicle information can increase or decrease due to maintenance service or addition or removal of equipment. Such change in the vehicle information can be dealt with by clearing the recorded vehicle information and impassable information with a predetermined timing. The vehicle information and the impassable information are cleared, for example, when the fact that equipment is added or removed is input by switching.

Although in the above processing, the guidance is given if the vehicle has approached the restriction point on the route while being guided along the route, configuration may be such that even if the vehicle is not being guided along the route, the guidance of the restriction point will be given by determining that the vehicle has approached the restriction point based on the positional information of the vehicle and travel direction information and the restriction point information.

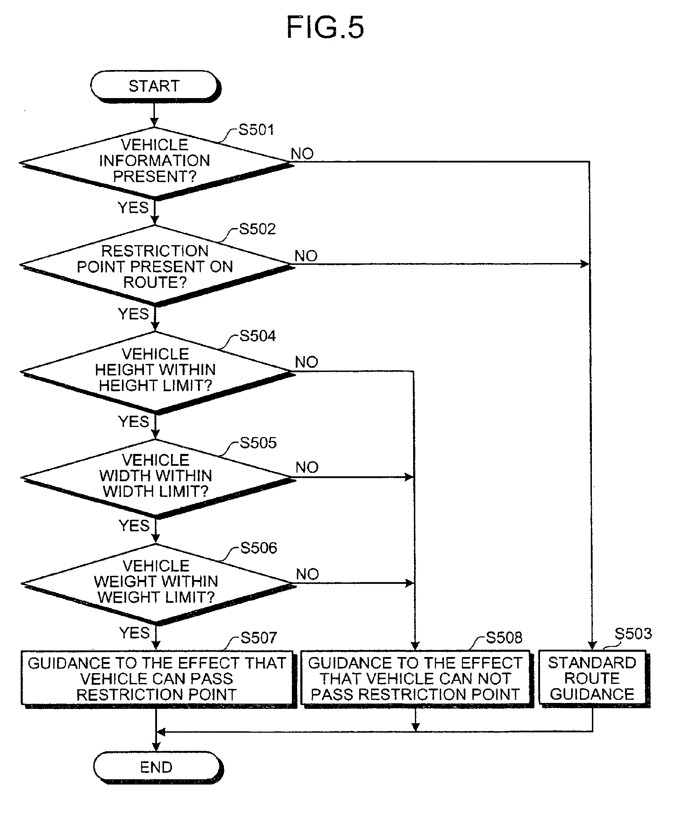

Fig. 5 is a flowchart of a procedure of processing executed by the navigation apparatus while guiding the vehicle along the route.

Route guidance is executed when a route searched for by the route searching unit 308 is present. In the processing of the route guidance, firstly, judgment is made whether the vehicle information is present (recorded) on the recording medium 304 (step S501). If the vehicle information is present (step S501: YES), then judgment is made whether the restriction point is present on the route (step S502). When a restriction point is present on a candidate guidance route (step S502: YES), then judgment is made with respect to each of the vehicle limitation items shown at step S504 and subsequent steps. If no vehicle information is present on the recording medium 304 (step S501: NO) or if no restriction point is present on the candidate guidance route (step S502: NO), then the route guidance in the case of no vehicle information being set (standard route guidance) is executed (step S503). The route guidance is performed by causing the display unit 302 to display a map and a guidance line indicating the route or causing the speaker 311 to audibly output the guidance sounds.

At step S504 and subsequent steps, judgment is made in accordance with the vehicular restriction information set for the restriction point. Firstly, judgment is made whether the vehicle height recorded as the vehicle information is within the height limit (step S504). If the vehicle height recorded as the vehicle information is within the height limit (step S504: YES), then judgment is made whether the vehicle width recorded as the vehicle information is within the width limit of the vehicle restriction (step S505). If the vehicle width recorded as the vehicle information is within the width limit (step S505: YES), then judgment is made whether the vehicle weight recorded as the vehicle information is within the weight limit of the vehicle restriction (step S506). If the vehicle weight recorded as the vehicle information is within the weight limit (step S506: YES), then it is judged that the vehicle can pass the restriction point where the vehicular restriction is set and guidance is given to the effect that the vehicle can pass this restriction point (step S507).

On the other hand, if the vehicle height recorded as the vehicle information is in excess of the height limit (step S504: NO), if the vehicle width recorded as the vehicle information is in excess of the width limit (step S505: NO), or if the vehicle weight recorded as the vehicle information is in excess of the weight limit (step S506: NO), then guidance is given to the effect that the vehicle cannot pass this restriction point (step S508). Guidance indicating that the vehicle can pass the restriction point at step S507 and guidance indicating that the vehicle cannot pass the restriction point at step S508 are given when the vehicle has approached this restriction point. Configuration may be such that these types of guidance will be given while the information of the route from the place of departure to the destination (for example, overall route maps) is being displayed, before the start of the route guidance.

At steps S504 to S506, configuration may be such that, if the impassable information is present (recorded) on the recording medium 304, judgment is made whether the vehicle can pass the restriction point on the route, using this impassable information.

At step S508, configuration may be such that a detour around this restriction point is searched for and the guidance to the effect that the vehicle cannot pass this restriction point, coupled with the guidance about this detour, is given or a route not passing through this restriction point is newly searched for.

The processing described above is configured to be executed by the navigation apparatus equipped in the vehicle. Alternatively, the arithmetic processing shown in Figs. 4 and 5 may be configured to be executed by an external server. In this case, the position recognizing unit 303 equipped in the vehicle detects the current position of the vehicle and sends the current position to the server by way of a communication unit and a network neither of which are shown and the server executes update processing of the vehicle information depending on the situation of passage. Configuration may be such that the vehicle information thus obtained (vehicle width, height, weight, etc.) as well will be controlled by the server, vehicle by vehicle.

The embodiments described above enable the obtaining of the vehicle information by actually operating the vehicle on a road and checking whether the vehicle is able to pass a vehicle restriction point, even if no information is available about the vehicle width, height, or weight as the vehicle information. Therefore, the embodiments enable the user to obtain the vehicle information without measuring the width, height, or weight of the vehicle. Furthermore, while the vehicle is being guided along the route, the embodiments enable giving guidance of whether the vehicle can pass the restriction point on the route, based on the vehicle information, contributing to enhanced accuracy of the route guidance.

Since the user is not required to input the vehicle information, the labor of manually inputting can be saved and at the same time, erroneous input can be prevented. Since the navigation apparatus is configured so as to obtain the vehicle restriction information and store (update) the information as the vehicle information while the vehicle is actually in operation, the same apparatus can be equipped in any vehicle whatsoever. As a result, it is not necessary to manufacture different apparatuses for different types of vehicles such as different apparatus for a large vehicle and a small vehicle, resulting in a reduction of the manufacturing cost.

The method described in the embodiments of the present invention can be realized by executing a pre-arranged program on a computer, etc. This program is recorded on a computer-readable recording medium such as a hard disk, a flexible disk, a CD-ROM, an MO, and a DVD and is executed by being read out from the recording medium by the computer. This program may be in the form of a transmission medium that can be distributed through networks such as the Internet.

## Claims

1. A route searching apparatus (100) comprising:
an acquiring unit (101) configured to acquire restriction information set for a restriction point restricting passage of a vehicle;
a judging unit (102) configured to judge a traveling situation of the vehicle with respect to the restriction point by judging whether the vehicle has passed the restriction point;
a setting unit (103) configured to set vehicle information, based on the restriction information and the traveling situation;
a command unit (110) configured to command a route searching; and
a searching unit (104) configured to, upon command of the route searching, searche for a route traversable by the vehicle based on the vehicle information
**characterised in that** when the judging unit (102) judges that the vehicle has passed the restriction point, the setting unit (103) is configured to compare the restriction information with the vehicle information to obtain a comparison result, and is configured to newly set the vehicle information based on the comparison result.

2. The route searching apparatus (100) according to claim 1, wherein
when the judging unit (102) judges that the vehicle has not passed the restriction point and the vehicle is being guided along the route, the setting unit (103) is configured to set impassable information based on the restriction information, and
the searching unit (104), when the command unit (110) commands the route searching, is configured to searche for the route traversable by the vehicle based on the vehicle information and the impassable information.

3. The route searching apparatus (100) according to claim 2, wherein
the command unit (110) is configured to command the route searching when the setting unit (103) newly sets any one of the vehicle information and impassable information while the vehicle is being guided along the route, the impassable information being information with respect to the restriction point that the vehicle cannot pass.

4. The route searching apparatus (100) according to claim 1, wherein
the restriction information is at least one of height information, width information and weight information of a vehicle that can pass through, and
the setting unit (103), based on the traveling situation and the restriction information, is configured to set at least one of a vehicle height, a vehicle width, and a vehicle weight as the vehicle information.

5. A navigation apparatus comprising:
the route searching apparatus (100) according to claim 1;
a presentation unit (107) configured to present information;
an approach determining unit (111) configured to determine whether the vehicle has approached a restriction point that lies ahead in a direction of travel of the vehicle; and
a control unit (106) configured to, when the approach determining unit (111) determines that the vehicle has approached the restriction point, control the presentation unit (107) to present the restriction information.

6. A navigation apparatus comprising:
the route searching apparatus (100) according to claim 1;
a presentation unit (107) configured to present information related to the route;
an approach determining unit (111) configured to determine whether the vehicle has approached a restriction point on the route; and
a control unit (106) configured to, when the approach determining unit (111) determines that the vehicle has approached the restriction point, control the presentation unit (107) to present the restriction information.

7. A route searching method comprising:
acquiring restriction information set for a restriction point restricting passage of a vehicle;
judging (S210, S202) a traveling situation of the vehicle with respect to the restriction point by judging whether the vehicle has passed the restriction point;
setting (S203) vehicle information based on the restriction information and the traveling situation;
commanding (S210) a route search; and
searching (S216) for, based on the vehicle information, a route traversable by the vehicle when the route search is commanded,
**characterised in that** when the judging step judges that the vehicle has passed the restriction point, the setting step compares the restriction information with the vehicle information to obtain a comparison result, and newly sets the vehicle information based on the comparison result.

8. A route searching program that causes a computer to execute the route searching method according to claim 7.

9. A computer-readable recording medium that stores therein the route searching program according to claim 8.

## Patentansprüche

1. Routensucheinrichtung (100), umfassend:
eine Erfassungseinheit (101), die dafür konfiguriert ist, Beschränkungsinformationen zu erfassen, welche für einen Beschränkungspunkt festgelegt sind, der das Passieren eines Fahrzeugs beschränkt;
eine Beurteilungseinheit (102), die dafür konfiguriert ist, eine Reisesituation des Fahrzeugs hinsichtlich des Beschränkungspunkts zu beurteilen, indem sie beurteilt, ob das Fahrzeug den Beschränkungspunkt passiert hat;
eine Festlegungseinheit (103), die dafür konfiguriert ist, Fahrzeuginformationen basierend auf der Beschränkungsinformation und der Reisesituation festzulegen;
eine Befehlseinheit (110), die dafür konfiguriert ist, eine Routensuche zu befehlen; und
eine Sucheinheit (104), die dafür konfiguriert ist, auf Befehl der Routensuche basierend auf den Fahrzeuginformationen nach einer vom Fahrzeug passierbaren Route zu suchen;
**dadurch gekennzeichnet, dass** die Festlegungseinheit (103), wenn die Beurteilungseinheit (102) urteilt, dass das Fahrzeug den Beschränkungspunkt passiert hat, dafür konfiguriert ist, die Beschränkungsinformationen mit den Fahrzeuginformationen zu vergleichen, um ein Vergleichsergebnis zu erhalten, und dafür konfiguriert ist, die Fahrzeuginformationen basierend auf dem Vergleichsergebnis neu festzulegen.

2. Routensucheinrichtung (100) gemäß Anspruch 1, wobei
die Festlegungseinheit (103), wenn die Beurteilungseinheit (102) urteilt, dass das Fahrzeug den Beschränkungspunkt nicht passiert hat, und das Fahrzeug entlang der Route geführt wird, dafür konfiguriert ist, die Unpassierbar-Informationen basierend auf den Beschränkungsinformationen festzulegen, und
die Sucheinheit (104), wenn die Befehlseinheit (110) die Routensuche befiehlt, dafür konfiguriert ist, basierend auf den Fahrzeuginformationen und Unpassierbar-Informationen nach der vom Fahrzeug passierbaren Route zu suchen.

3. Routensucheinrichtung (100) gemäß Anspruch 2, wobei
die Befehlseinheit (110) dafür konfiguriert ist, die Routensuche zu befehlen, wenn die Festlegungseinheit (103) die Fahrzeuginformationen oder Unpassierbar-Informationen neu festlegt, während das Fahrzeug entlang der Route geführt wird, wobei die Unpassierbar-Informationen Informationen hinsichtlich des Beschränkungspunkts sind, den das Fahrzeug nicht passieren kann.

4. Routensucheinrichtung (100) gemäß Anspruch 1, wobei
die Beschränkungsinformationen zumindest eine der Informationen Höheninformationen, Breiteninformationen und Gewichtsinformationen eines Fahrzeugs umfassen, das passieren kann, und
die Festlegungseinheit (103) basierend auf der Reisesituation und den Beschränkungsinformationen dafür konfiguriert ist, zumindest eine der Fahrzeuginformationen Fahrzeughöhe, Fahrzeugbreite und Fahrzeuggewicht als die Fahrzeuginformationen festzulegen.

5. Navigationseinrichtung, umfassend:
die Routensucheinrichtung (100) gemäß Anspruch 1;
eine Präsentationseinheit (107), die dafür konfiguriert ist, Informationen zu präsentieren;
eine Annäherungsbestimmungseinheit (111), die dafür konfiguriert ist, zu bestimmen, ob das Fahrzeug sich einem Beschränkungspunkt, der in einer Reiserichtung des Fahrzeugs liegt, genähert hat; und
eine Steuereinheit (106), die dafür konfiguriert ist, wenn die Annäherungsbestimmungseinheit (111) bestimmt, dass das Fahrzeug sich dem Beschränkungspunkt genähert hat, die Präsentationseinheit (107) zu steuern, um die Beschränkungsinformationen zu präsentieren.

6. Navigationseinrichtung, umfassend:
die Routensucheinrichtung (100) gemäß Anspruch 1;
eine Präsentationseinheit (107), die dafür konfiguriert ist, Informationen mit Bezug zur Route zu präsentieren;
eine Annährungsbestimmungseinheit (111), die dafür konfiguriert ist, zu bestimmen, ob das Fahrzeug sich einem Beschränkungspunkt auf der Route angenähert hat; und
eine Steuereinheit (106), die dazu konfiguriert ist, wenn die Annäherungsbestimmungseinheit (111) bestimmt, dass sich das Fahrzeug dem Beschränkungspunkt genähert hat, die Präsentationseinheit (107) zu steuern, um die Beschränkungsinformationen zu präsentieren.

7. Routensuchverfahren, umfassend:
Erfassen von Beschränkungsinformationen, die für einen Beschränkungspunkt festgelegt sind, der das Passieren eines Fahrzeugs beschränkt;
Beurteilen (S210, S202) einer Reisesituation des Fahrzeugs hinsichtlich des Beschränkungspunkts durch Beurteilung, ob das Fahrzeug den Beschränkungspunkt passiert hat;
Festlegen (S203) von Fahrzeuginformationen basierend auf den Beschränkungsinformationen und der Reisesituation;
Befehlen (S210) einer Routensuche; und
Suchen (S216), basierend auf den Fahrzeuginformationen, nach einer Route, die vom Fahrzeug passierbar ist, wenn die Routensuche befohlen wird,
**dadurch gekennzeichnet, dass** der Festlegungsschritt, wenn der Beurteilungsschritt urteilt, dass das Fahrzeug den Beschränkungspunkt passiert hat, die Beschränkungsinformationen mit den Fahrzeuginformationen vergleicht, um ein Vergleichsergebnis zu erhalten, und die Fahrzeuginformationen basierend auf dem Vergleichsergebnis neu festlegt.

8. Routensuchprogramm, das einen Computer dazu veranlasst, das Routensuchverfahren gemäß Anspruch 7 durchzuführen.

9. Computerlesbares Aufzeichnungsmedium, welches das Routensuchprogramm gemäß Anspruch 8 speichert.

## Revendications

1. Appareil de recherche d'itinéraire (100) comprenant :
une unité d'acquisition (101) configurée de façon à acquérir une information de restriction définie pour un point de restriction restreignant le passage d'un véhicule ;
une unité de jugement (102) configurée de façon à juger une situation de déplacement du véhicule par rapport au point de restriction en jugeant si le véhicule a franchi le point de restriction ;
une unité de définition (103) configurée de façon à définir l'information du véhicule, en se basant sur l'information de restriction et sur la situation de déplacement ;
une unité de commande (110) configurée de façon à commander une recherche d'itinéraire ; et
une unité de recherche (104) configurée de façon à rechercher, lors de la commande de la recherche d'itinéraire, un itinéraire franchissable par le véhicule en se basant sur l'information du véhicule,
**caractérisé en ce que**, lorsque l'unité de jugement (102) juge que le véhicule a franchi le point de restriction, l'unité de définition (103) est configurée de façon à comparer l'information de restriction avec l'information du véhicule afin d'obtenir un résultat de comparaison, et est configurée de façon à définir à nouveau l'information du véhicule en se basant sur ce résultat de comparaison.

2. Appareil de recherche d'itinéraire (100) selon la revendication 1, dans lequel
lorsque l'unité de jugement (102) juge que le véhicule n'a pas franchi le point de restriction et que le véhicule est en train d'être guidé le long de l'itinéraire, l'unité de définition (103) est configurée de façon à définir une information infranchissable en se basant sur l'information de restriction, et
l'unité de recherche (104) est configurée de façon à rechercher, lorsque l'unité de commande (110) commande la recherche d'itinéraire, l'itinéraire franchissable par le véhicule en se basant sur l'information du véhicule et sur l'information infranchissable.

3. Appareil de recherche d'itinéraire (100) selon la revendication 2, dans lequel
l'unité de commande (110) est configurée de façon à commander la recherche d'itinéraire lorsque l'unité de définition (103) définit de nouveau l'une quelconque de l'information du véhicule et de l'information infranchissable tandis que le véhicule est en train d'être guidé le long de l'itinéraire, l'information infranchissable étant une information par rapport au point de restriction que le véhicule ne peut pas franchir.

4. Appareil de recherche d'itinéraire (100) selon la revendication 1, dans lequel
l'information de restriction est au moins soit une information sur la hauteur, soit une information sur la largeur, soit une information sur le poids d'un véhicule qui peut passer à travers, et
l'unité de définition (103), basée sur la situation de déplacement et sur l'information de restriction, est configurée de façon à définir au moins soit une hauteur de véhicule, soit une largeur de véhicule, soit un poids de véhicule comme l'information du véhicule.

5. Appareil de navigation comprenant :
l'appareil de recherche d'itinéraire (100) selon la revendication 1 ;
une unité de présentation (107) configurée de façon à présenter une information ;
une unité de détermination d'approche (111) configurée de façon à déterminer si le véhicule s'est approché un point de restriction qui se trouve en avant dans une direction de déplacement du véhicule ; et
une unité de commande (106) configurée de façon à, lorsque l'unité de détermination d'approche (111) détermine que le véhicule s'est approché du point de restriction, commander à l'unité de présentation (107) de présenter l'information de restriction.

6. Appareil de navigation comprenant :
l'appareil de recherche d'itinéraire (100) selon la revendication 1 ;
une unité de présentation (107) configurée de façon à présenter une information se rapportant à l'itinéraire ;
une unité de détermination d'approche (111) configurée de façon à déterminer si le véhicule s'est approché d'un point de restriction sur l'itinéraire ; et
une unité de commande (106) configurée de façon à, lorsque l'unité de détermination d'approche (111) détermine que le véhicule s'est approché du point de restriction, commander à l'unité de présentation (107) de présenter l'information de restriction.

7. Procédé de recherche d'itinéraire comprenant :
l'acquisition d'une information de restriction définie pour un point de restriction restreignant le passage d'un véhicule ;
le jugement (S210, S202) d'une situation de déplacement du véhicule par rapport au point de restriction en jugeant si le véhicule a franchi le point de restriction ;
la définition (S203) de l'information du véhicule en se basant sur l'information de restriction et sur la situation de déplacement ;
la commande (S210) d'une recherche d'itinéraire ; et
la recherche (S216), en se basant sur l'information du véhicule, d'un itinéraire franchissable par le véhicule lorsque la recherche d'itinéraire est commandée,
**caractérisé en ce que**, lorsque l'étape de jugement juge que le véhicule a franchi le point de restriction, l'étape de définition compare l'information de restriction avec l'information du véhicule afin d'obtenir un résultat de comparaison, et définit de nouveau l'information du véhicule en se basant sur ce résultat de comparaison.

8. Programme de recherche d'itinéraire qui fait exécuter à un ordinateur le procédé de recherche d'itinéraire selon la revendication 7.

9. Support d'enregistrement lisible par ordinateur qui stocke sur lui le programme de recherche d'itinéraire selon la revendication 8.
